# EUROPÄISCHE PATENTANMELDUNG

(11) **EP 2 549 320 A1**
(43) Veröffentlichungstag der Anmeldung: **23.01.2013**
(21) Anmeldenummer: 12176890.7
(22) Anmeldetag: 18.07.2012
(51) Int. Cl.: G02B 7/16, G02B 21/24

(54) **Wechselvorrichtung für ein Mikroskop**

(30) Priorität: 19.07.2011 DE 102011051949
(71) Anmelder: Leica Microsystems CMS GmbH, 35578 Wetzlar (DE)
(72) Erfinder: Kubek, Martin, 35759 Driedorf (DE)
(74) Vertreter: Schaumburg, Thoenes, Thurn, Landskron, Eckert

(57) **Zusammenfassung**

Beschrieben ist eine Wechselvorrichtung für ein Mikroskop (10). Die Wechselvorrichtung umfasst einen um eine Drehachse (R) drehbar gelagerten Tragekörper (50, 150, 250, 350) mit einem ersten Kopplungsteil (52) und mindestens ein optisches Element (100, 200, 300, 400) mit einem zweiten Kopplungsteil (102), der zur lösbaren Anbringung des optischen Elementes (100, 200, 300, 400) an dem Tragekörper (50, 150, 250, 350) mit dem ersten Kopplungsteil (52) koppelbar ist. Der erste Kopplungsteil (52) weist eine erste mechanische Codierstruktur (56) und der zweite Kopplungsteil (102) eine zweite mechanische Codierstruktur (104) auf, die in einer vorbestimmten Montageausrichtung auf die erste Codierstruktur (56) komplementär zu dieser ausgebildet und in dieser Montageausrichtung senkrecht zur Drehachse (R) des Tragekörpers (50, 150, 250, 350) auf die erste Codierstruktur (56) steckbar ist.

## Beschreibung

Die Erfindung betrifft eine Wechselvorrichtung für ein Mikroskop, umfassend einen um eine Drehachse drehbar gelagerten Tragekörper mit einem ersten Kopplungsteil und mindestens ein optisches Element mit einem zweiten Kopplungsteil, der zur lösbaren Anbringung des optischen Elementes an dem Tragekörper mit dem ersten Kopplungsteil koppelbar ist.

Wechselvorrichtungen vorstehend genannter Art werden in Mikroskopen als Halterungen zur wahlweisen Befestigung von optischen Elementen, z.B. Fluoreszenz-Filterblöcken, eingesetzt. Beispielhaft wird hierzu auf die DE 199 36 497 A1 verwiesen, die eine Wechselvorrichtung offenbart, bei der die an einem Tragekörper anzubringenden optischen Elemente jeweils mit einem Schwalbenschwanzschlitten ausgestattet sind, der an einer Anlagefläche des Tragekörpers montiert wird. Vor der Anlagefläche sind als zusammenwirkende Halterungskomponenten ein stiftförmiger Bolzen und neben diesem eine unter Spannung von dem Bolzen weggebogene Druckfeder befestigt. Infolge der Spannung der gebogenen Druckfeder werden diese und der Bolzen an die Innenseiten des gegen die Anlagefläche gedrückten Schwalbenschwanzschlittens gepresst.

Nachteilig an dieser vorbekannten Wechselvorrichtung ist, dass das jeweilige optische Element mit seinem Schwalbenschwanzschlitten von der Seite her, d.h. in einer Richtung, die im Wesentlichen parallel zur Anlagefläche des Tragekörpers liegt, auf die aus dem Bolzen und der Druckfeder gebildeten Federkonstruktion geklemmt werden muss. Aus diesem Grund muss der Tragekörper zur Ankopplung der optischen Elemente beispielsweise mittels einer eigens hierfür vorgesehenen Bremse festgesetzt werden, um eine unerwünschte, die Montage erschwerende Drehbewegung des Tragekörpers zu verhindern. Außerdem muss bei der vorstehend genannten Federkonstruktion die Durchbiegung der Druckfeder präzise eingestellt werden, um die gewünschte Klemmwirkung im montierten Zustand zu erzielen.

Aus den Druckschriften DE 199 24 686 A1 und US 2008/0043324 A1 sind Wechselvorrichtungen bekannt, die jeweils einen um eine Drehachse drehbar gelagerten Tragekörper aufweisen. An diesem Tragekörper kann ein optisches Element lösbar angebracht werden.

Aufgabe der Erfindung ist es, eine einfach aufgebaute Wechselvorrichtung für ein Mikroskop anzugeben, die eine sichere Halterung und präzise Positionierung von optischen Elementen und einen einfachen Wechsel dieser Elemente ermöglicht.

Die Erfindung löst diese Aufgabe durch eine Wechselvorrichtung für ein Mikroskop mit den Merkmalen nach Anspruch 1.

Die erfindungsgemäße Wechselvorrichtung zeichnet sich dadurch aus, dass der erste Kopplungsteil eine erste mechanische Codierstruktur und der zweite Kopplungsteil eine zweite mechanische Codierstruktur aufweist, die in einer vorbestimmten Montageausrichtung auf die erste Codierstruktur komplementär zu dieser ausgebildet und in dieser Montageausrichtung senkrecht zur Drehachse des Tragekörpers auf die erste Codierstruktur steckbar ist.

Die Erfindung sieht also an den Kopplungsteilen mechanische Codierstrukturen vor, die derart komplementär zueinander ausgebildet sind, dass sie allein in einer vorbestimmten Montageausrichtung zueinander miteinander gekoppelt werden können. Die Codierstrukturen sind dabei so ausgeführt, dass sie ein Aufstecken der an dem optischen Element vorgesehenen zweiten Codierstruktur auf die an dem Tragekörper vorgesehene erste Codierstruktur senkrecht zur Drehachse des Tragekörpers, d.h. in radialer Richtung ermöglichen. Unter einer "komplementären" Struktur ist dabei eine raumkörperliche Ausgestaltung zu verstehen, den ein räumliches Zueinanderpassen im Sinne eines Schlüssel-Schloss-Prinzips in der gewünschten Montageausrichtung und in radialer Richtung senkrecht zur Drehachse des Tragekörpers bewirkt. Durch die komplementären Codierstrukturen ist demnach eine Schnittstellengeometrie gegeben, die eine eindeutige, eine Fehlmontage vermeidende Positionierung des optischen Elementes an dem Tragekörper gewährleistet.

Die Codierstrukturen ermöglichen es dem Benutzer, das optische Element einfach in radialer Richtung auf den Tragekörper zu stecken. Dies erleichtert die Handhabung der Wechselvorrichtung gegenüber der aus dem Stand der Technik bekannten Lösung erheblich, bei der das optische Element von der Seite her an dem Tragekörper festgeklemmt wird. Insbesondere ist es nicht mehr erforderlich, den Tragekörper zur der Montage des optischen Elementes beispielsweise mittels einer Bremse festzusetzen oder durch eine Schraube zu sichern, da durch das radiale Aufstecken des optischen Elementes auf den Tragekörper drehwirksame Montagekräfte vermieden werden. Nachfolgend wird daher unter Montage des optischen Elements das Befestigen bzw. Aufstecken des optischen Elements auf dem Tragekörper, insbesondere auch ohne Verwendung von Werkzeugen, verstanden.

Durch die radial komplementären Codierstrukturen ist das optische Element auch gut gegen Fliehkräfte gesichert, die beim Beschleunigen oder Abbremsen des Tragekörpers auftreten, wenn dieser um die Drehachse rotiert.

Eine der beiden Codierstrukturen weist mindestens ein erstes Eingriffselement, z.B. einen Stift und/oder einen länglichen Vorsprung, auf, während die jeweils andere Codierstruktur mindestens ein hierzu komplementäres zweites Eingriffselement, z.B. eine Ausnehmung und/oder eine Nut aufweist, das senkrecht zur Drehachse des Tragekörpers mit dem ersten Eingriffselement in Eingriff bringbar ist. Diese ineinander greifenden Elemente bewirken, dass das optische Element einfach an dem Tragekörper montiert werden kann und sicher an diesen gehalten ist.

Alternativ oder zusätzliche zu den vorstehend genannten Eingriffselementen weist in einer weiteren vorteilhaften Ausgestaltung eine der beiden Codierstrukturen mindestens ein erstes flächiges Anlageelement und die jeweils andere Codierstruktur mindestens ein hierzu komplementäres zweites flächiges Anlageelement auf, das senkrecht zur Drehachse des Tragekörpers mit dem ersten Anlageelement in Anlage bringbar ist. Insbesondere wenn die beiden Codierstrukturen sowohl ineinander greifende Elemente, wie sie beispielsweise ein Stift und eine Bohrung oder ein länglicher Vorsprung und eine Nut darstellen, als auch flächig in Kontakt stehende Anlageelemente aufweisen, ist gewährleistet, dass die Codierstrukturen zum einen ein einfaches radiales Aufstecken des optischen Elementes unter Vermeidung einer Fehlmontage ermöglichen und zum anderen das optische Element sicher an dem Tragekörper gehalten ist.

Die paarweise ineinander greifenden definieren Eingriffselemente und/oder die paarweise aneinander anliegenden Anlageelemente eine Dreipunkt-Auflage. Eine solche Dreipunkt-Auflage legt eindeutig, d.h. weder über- noch unterbestimmt, eine Montageebene fest, die eine sichere Anbringung des optischen Elementes an dem Tragekörper gewährleistet.

Sind Nuten als Eingriffselemente vorgesehen, so sind diese im Querschnitt vorzugsweise rechteckig oder dreieckig ausgebildet. Solche sogenannten U- bzw. V-Nuten gewährleisten eine zuverlässige Ankopplung des optischen Elementes an dem Tragekörper. Insbesondere V-Nuten begünstigen infolge ihrer im Querschnitt spitz zulaufenden Form die Selbstausrichtung des optischen Elementes an dem Tragekörper.

In einer bevorzugten Ausführung sind mindestens zwei Nuten vorgesehen, von denen eine erste, im Querschnitt vorzugsweise rechteckige Nut parallel zur Drehachse des Tragekörpers und eine zweite, im Querschnitt vorzugsweise dreieckige Nut quer zu der ersten Nut verläuft. Diese Ausführung begünstigt durch die quer zueinander angeordneten, paarweise ineinander greifenden Elemente eine sichere Halterung des optischen Elementes an dem Tragekörper.

Vorzugsweise ist die zweite Nut eine durch die erste Nut unterbrochene Nut, während der zweite Vorsprung als stangenförmiges Element ausgebildet ist, das den ersten Vorsprung in Querrichtung durchsetzt. In dieser Ausführungsform sind die beiden Nuten gleichsam kreuzweise zueinander angeordnet, was die selbstausrichtende Anbringung des optischen Elementes an dem Tragekörper weiter begünstigt.

Vorzugsweise weist die erste Codierstruktur mindestens ein erstes Verbindungselement und die zweite Codierstruktur mindestens ein zweites Verbindungselement auf, die zur Kopplung der beiden Codierstrukturen lösbar miteinander in Kontakt bringbar, d.h. koppelbar, sind. In einer bevorzugten Ausgestaltung sind die Verbindungselemente jeweils an einem der miteinander in Eingriff bringbaren Eingriffselemente und/oder einen der miteinander in Anlage bringbaren Anlageelemente ausgebildet. Beispielsweise ist eines der beiden Verbindungselemente an einer Bodenfläche der im Querschnitt rechteckigen Nut und das andere Verbindungselement an einer dieser Bodenfläche zugewandten ebenen Stirnfläche des in die Nut greifenden Vorsprungs ausgebildet. Dieser sorgt für eine besonders sichere Halterung des optischen Elementes an dem Tragekörper.

Vorzugsweise umfassen das erste Verbindungselement und das zweite Verbindungselement magnetisch anziehende Elemente. Beispielsweise ist an dem ersten Verbindungselement ein Magnet angebracht und an dem zweiten Verbindungselement ein ferromagnetisches Material. Es ist auch denkbar, dass sowohl das erste Verbindungselement als auch das zweite Verbindungselement einander anziehende Magnete umfasst oder als solche ausgebildet sind. Die Reichweite der zwischen solchen Elementen erzeugten magnetischen Anziehungskraft bewirkt, dass die beim Einsetzen des optischen Elementes einander angenäherten Codierstrukturen selbstausrichtend aufeinander gezogen werden. Dies erleichtert die Montage des optischen Elementes an der Wechselvorrichtung. Als Verbindungselemente sind unterschiedliche Kombinationen von magnetisch wirksamen Elementen, d.h. Magneten, magnetisierten oder magnetisierbaren Elementen, denkbar. Beispielsweise können Permanentmagnete und/oder Elemente aus ferrimagnetischen oder ferromagnetischen Materialien verwendet werden. Auch Elektromagnete können als Verbindungselemente zum Einsatz kommen.

In einer vorteilhaften Ausgestaltung sind die beiden miteinander in Anlage bringbaren Anlageelemente jeweils aus zwei winklig, vorzugsweise rechtwinklig zueinander angeordneten Flächen gebildet. Ist eine dieser Flächen im Montagezustand horizontal ausgerichtet, so kann sie als Auflagefläche dienen, auf der das ihr zugeordnete Anlageelement in Folge der Schwerkraft aufliegt. Eine solche Auflagefläche kann beispielsweise am unteren Ende des Tragekörpers ausgebildet sein.

In einer besonders bevorzugten Ausführungsform sind die einander magnetisch anziehenden Elemente der miteinander verbundenen Codierstrukturen versetzt zueinander angeordnet und erzeugen dadurch eine magnetische Anziehungskraft, die zwei Kraftkomponenten hat, die jeweils eine magnetische Anziehung zwischen den miteinander in Anlage gebrachten Flächen der Anlageelemente bewirken. Liegt beispielsweise eines der Anlageelemente auf einer horizontal angeordneten Auflagefläche auf, so kann durch vertikal gegeneinander versetzte, magnetisch wirksame Verbindungselemente eine schräg nach unten gerichtete Anziehungskraft erzeugt werden, die eine horizontale Kraftkomponente und eine vertikal nach unten gerichtete Kraftkomponente aufweist. Durch die horizontale Kraftkomponente werden dann die vertikal ausgerichteten Flächen aufeinander gedrückt, während die vertikal nach unten gerichtete Kraftkomponente die auf der horizontalen Auflagefläche aufliegende Fläche zusätzlich zu der ohnehin wirksamen Schwerkraft auf die Auflagefläche drückt.

Anstelle von magnetisch wirksamen Verbindungselementen können auch Verbindungselemente anderen Typs, z.B. Schrauben, Stifte, Federn oder dergleichen als kräfteerzeugende Mittel Verwendung finden. In einer bevorzugten Ausgestaltung umfasst beispielsweise das erste oder das zweite Verbindungselement eine Federklemme und das jeweils andere Verbindungselement ein Rastelement, das in die Federklemme einrastet. Die Federkraft wirkt auf die gegeneinander drückenden Auflageflächen der beiden Anlageelemente und sorgt damit für selbstausrichtenden Kontakt der Anlageelemente an den Auflageflächen und somit für eine sichere Halterung des optischen Elementes an der Wechselvorrichtung.

Es ist darauf hinzuweisen, dass die vorstehend beschriebenen Eingriffs, Anlage- und Verbindungselemente in beliebigen Kombinationen verwendet werden können, sofern sichergestellt ist, dass durch diese Elemente gebildeten Codierstrukturen in der erfindungsgemäßen Weise zusammenwirken, um eine radiale Ankopplung unter Vermeidung einer Fehlmontage und eine sichere Halterung des optischen Elementes an dem Tragekörper zu bewirken. Auch können die Eingriffs-, Anlage- und Verbindungselemente beliebig auf den Tragekörper und das optische Element verteilt werden, sofern ihr erfindungsgemäßes Zusammenwirken sichergestellt ist. Beispielsweise kann in einer bestimmten Ausführungsform eine Nut an dem Tragekörper und ein in die Nut greifender Vorsprung an dem optischen Element ausgebildet sein, während in einer alternativen Ausführungsform die entsprechende Nut an dem optischen Element und der Vorsprung an dem Tragekörper angeordnet ist.

Vorzugsweise umfasst das mindestens eine optische Element mehrere optische Elemente mit jeweils dem zweiten Kopplungsteil und der Tragekörper mehrere erste Kopplungsteile, die jeweils einem der zweiten Kopplungsteile zugeordnet sind. In diesem Fall kann der Tragekörper mit mehreren optischen Elementen bestückt und bei Bedarf in dem Mikroskop gedreht werden, um wahlweise eines dieser optischen Elemente in Betrieb zu nehmen. Die optischen Elemente können beispielsweise Fluoreszenz-Filterblöcke sein, die jeweils ein Anregungsfilter, einen Strahlteiler und ein Sperrfilter enthalten, so kann die Wechselvorrichtung vorteilhaft in der Fluoreszenzmikroskopie eingesetzt werden, um wahlweise einen dem Filtersatz zugeordneten Fluoreszenzbereich auszuwählen.

Vorzugsweise ist der Tragekörper ein um seine Drehachse rotationssymmetrischer Revolver. In diesem Fall sind die an dem Revolver angeordneten Kopplungsteile und auch die diesen zugeordneten, an den optischen Elementen vorgesehenen Kopplungsteile vorzugsweise jeweils baugleich ausgeführt. Somit kann jedes der optischen Elemente mit jedem der an dem Revolver ausgebildeten Kopplungsteile verbunden werden.

Die Erfindung sieht ferner ein Mikroskop mit einer Wechselvorrichtung der vorstehend beschriebenen Art vor.

Im Folgenden wird die Erfindung unter Bezugnahme auf die Figuren näher erläutert. Darin zeigen:
- Fig.1: eine schematische Darstellung eines Fluoreszenzmikroskops, in dem eine Wechselvorrichtung entsprechend der Erfindung angeordnet ist;
- Fig. 2: eine perspektivische Ansicht eines Revolvers, der Teil einer Wechselvorrichtung entsprechend dem ersten Ausführungsbeispiel ist;
- Fig. 3: eine schematische Ansicht eines Fluoreszenz-Filterblocks, der Teil der Wechselvorrichtung entsprechend dem ersten Ausführungsbeispiel ist;
- Figur 4: eine Seitenansicht der Wechselvorrichtung entsprechend dem ersten Ausführungsbeispiel mit einem angefügten optischen Element;
- Figur 5: eine Schnittansicht der Wechselvorrichtung nach erstem Ausführungsbeispiel im montierten Zustand;
- Figur 6: eine perspektivische Ansicht der Wechselvorrichtung nach erstem Ausführungsbeispiel im montierten Zustand;
- Figur 7: eine perspektivische Ansicht eines Revolvers, der Teil einer Wechselvorrichtung nach zweitem Ausführungsbeispiel ist;
- Figur 8: einen Filterblock, der Teil der Wechselvorrichtung nach zweitem Ausführungsbeispiel ist;
- Figur 9: einen Revolver, der Teil einer Wechselvorrichtung nach drittem Ausführungsbeispiel ist;
- Figur 10: einen Filterblock, der Teil der Wechselvorrichtung nach drittem Ausführungsbeispiel ist;
- Figur 11: eine perspektivische Ansicht der Wechselvorrichtung nach drittem Ausführungsbeispiel im montierten Zustand;
- Figur 12: eine Schnittansicht der Wechselvorrichtung nach drittem Ausführungsbeispiel;
- Figur 13: eine perspektivische Ansicht eines Revolvers, der Teil einer Wechselvorrichtung nach viertem Ausführungsbeispiel ist;
- Figur 14: eine perspektivische Ansicht der Wechselvorrichtung nach viertem Ausführungsbeispiel im montierten Zustand;
- Figur 15: eine Draufsicht der Wechselvorrichtung nach viertem Ausführungsbeispiel im montierten Zustand; und
- Figur 16: eine Seitenansicht der Wechselvorrichtung nach viertem Ausführungsbeispiel im montierten Zustand.

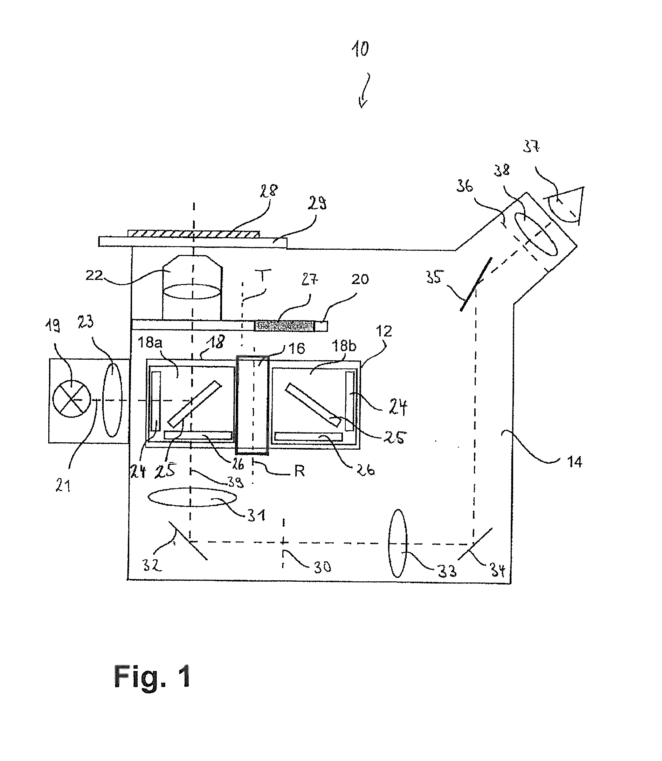

Figur 1 zeigt ein inverses Fluoreszenzmikroskop 10, das eine erfindungsgemäße Wechselvorrichtung 12 enthält. Die Darstellung nach Figur 1 ist rein schematisch und soll lediglich die Anordnung der Wechselvorrichtung 12 in dem Fluoreszenzmikroskop 10 veranschaulichen.

Die Wechselvorrichtung 12 ist in einem Stativ 14 des Fluoreszenzmikroskops 10 montiert. Sie umfasst einen um eine Drehachse R drehbar gelagerten Tragekörper 16, im Folgenden als Revolver bezeichnet. Der Revolver 16 ist mit mehreren Filterblöcken 18 bestückt, von denen in der Darstellung nach Figur 1 zwei in der Aufsicht gezeigt sind. Der Revolver 16 und die Filterblöcke 18 werden weiter unten in verschiedenen Ausführungsformen im Detail beschrieben.

Von einer Lichtquelle 19 geht ein Beleuchtungsstrahlengang 21 aus. Er durchläuft eine Beleuchtungsoptik 23 und trifft auf einen Fluoreszenzfilterblock 18, der ein Anregungsfilter 24, einen unter 45° im Beleuchtungsstrahlengang angeordneten Strahlteiler 25 und ein Sperrfilter 26 (wird auch als Ausgangsfilter bezeichnet) umfasst. Der Beleuchtungsstrahl durchläuft das Anregungsfilter 24 und wird an dem Strahlteiler 25 zu einem Objektiv 22 gerichtet, das an einem Objektivrevolver 20 angebracht ist. Der Objektivrevolver 20 ist um eine Revolver-Drehachse T drehbar und weist eine zweite, unbestückte Position 27 (grau hinterlegt) für ein weiteres Objektiv auf. Der Beleuchtungsstrahlengang 21 beleuchtet eine Probe 28, die auf einem Mikroskoptisch 29 angeordnet ist.

Die Wechselvorrichtung 12 dient dazu, wahlweise einen der Filterblöcke (18a, 18b) in den Beleuchtungsstrahlengang 21 einzuschwenken.

Das Objektiv 22 bildet die Probe 28 auf eine erste Zwischenbildebene 30 ab. Dazu durchläuft ein Abbildungsstrahlengang 39 das Objektiv 22, den Strahlteiler 25, das Sperrfilter 26 und eine Tubuslinse 31 und wird von einem ersten Umlenkspiegel 32 auf die erste Zwischenbildebene 30 gerichtet. Das Zwischenbild wird mit einer Transportoptik 33, welche keine weitere Vergrößerung erzeugt, über einen zweiten Umlenkspiegel 34 und einen dritten Umlenkspiegel 35 auf eine zweite Zwischenbildebene 36 abgebildet. Das Zwischenbild kann von einem Benutzer 37 mit einem Okular 38 betrachtet werden. Alternativ kann das Zwischenbild auf eine Kamera (nicht gezeigt) gerichtet werden.

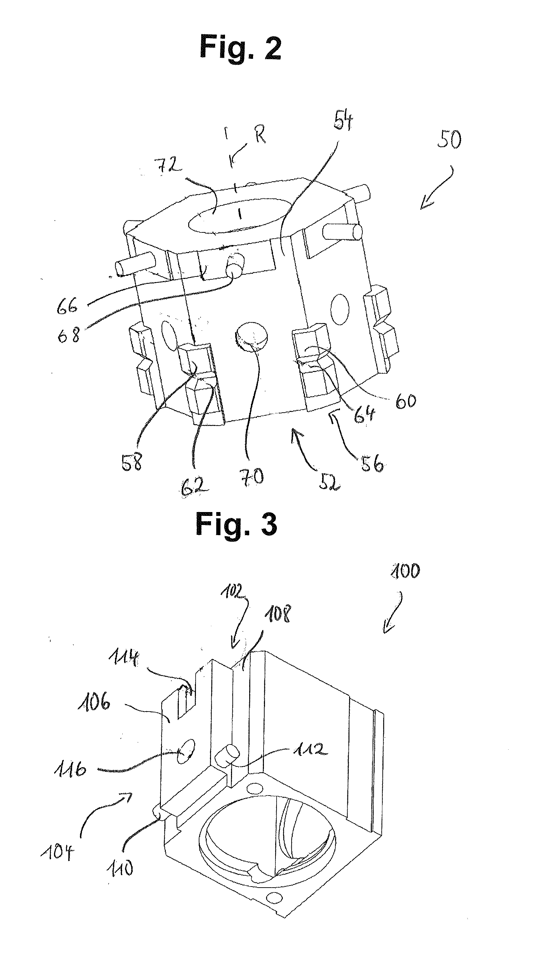

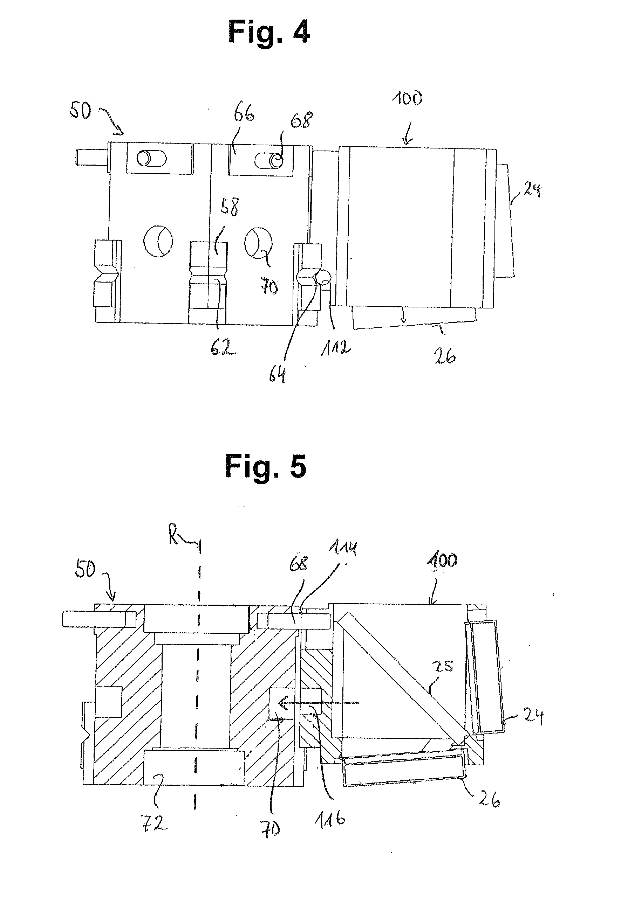

In den Figuren 2 bis 5 ist eine Wechselvorrichtung nach einem ersten Ausführungsbeispiel gezeigt. Dabei sind in den Figuren 2 und 3 die einzelnen Komponenten der Wechselvorrichtung dargestellt, während die Figuren 4 und 5 die Wechselvorrichtung im montierten Zustand zeigt.

Die Wechselvorrichtung nach erstem Ausführungsbeispiel umfasst einen in Figur 2 dargestellten Revolver 50, der mit sechs Filterblöcken bestückt werden kann, von denen in Figur 3 einer beispielhaft dargestellt und mit 100 bezeichnet ist.

Der Revolver 50 weist sechs baugleiche Kopplungsteile 52 auf, an denen jeweils der Filterblock 100 (bzw. andere im Hinblick auf die Ankopplung baugleiche Filterblöcke) anbringbar sind. Der jeweilige Kopplungsteil 52 ist auf der Seitenfläche 54 des Revolvers 50 ausgebildet.

Der Kopplungsteil 52 des Revolvers 50 weist eine erste mechanische Codierstruktur, die in Figur 2 allgemein mit 56 bezeichnet ist. Diese erste mechanische Codierstruktur 56 hat in der unteren Hälfte des Kopplungsteils der Seitenfläche 54 zwei Nutsockel 58 und 60 auf, in denen jeweils eine V-förmige Nut 62 und 64 ausgebildet ist. Die Nuten 62 und 64 sind fluchend aufeinander ausgerichtet. Sie können somit auch eine als eine einzige, jedoch unterbrochene Nut aufgefasst werden. Am oberen Ende der Seitenfläche 54 ist eine Anlagefläche 66 ausgebildet, aus der ein Stift 68 hervorsteht. Etwa in der Mitte der Seitenfläche 54 befindet sich ein erster kreisrunder Magnet 70.

Wie am besten in der Darstellung nach Figur 5 zu erkennen ist, wird der Revolver 50 von einer stufig ausgebildeten Lagerbohrung 72 durchsetzt ist, die dazu dient, den Revolver 50 an der in den Figuren lediglich schematisch angedeuteten Drehachse R drehbar zu lagern.

Der in Figur 3 allein gezeigte Filterblock 100 hat einen dem Kopplungsteil 52 des Revolvers 50 zugeordneten Kopplungsteil 102. Dieser weist einen zu der ersten Codierstruktur 56 des Revolvers 50 komplementär ausgebildete, in Figur 3 allgemein mit 104 bezeichnete zweite mechanische Codierstruktur. Diese komplementäre Codierstruktur 104 ist wiederum aus einer quaderförmigen Erhebung 106 gebildet, die von einer Stirnfläche 108 absteht. Die Erhebung 106 hat an ihrem unteren Ende zwei seitlich abstehende Vorsprünge 110, 112 sowie an ihrem oberen Ende eine rechteckige Ausnehmung 114. Etwa in der Mitte der der Erhebung 106 befindet sich ein zweiter kreisrunder Magnet 116.

Die Codierstrukturen 56 und 104 sind einander derart angepasst, dass der Filterblock 100 mit seinem Kopplungsteil 102 in radialer Richtung senkrecht zur Drehachse R auf den Kopplungsteil 52 des Revolvers 50 gesteckt werden kann. Wird der Filterblock 100 in dieser Weise, also ohne Einsatz von Werkzeugen, an dem Revolver 50 montiert, so kommt der Vorsprung 112 in Eingriff mit der Nut 62, der Vorsprung 110 in Eingriff mit der Nut 64, der obere Teil der Stirnseite der Erhebung 58 in Anlage mit der Anlagefläche 66 und die Ausnehmung 114 in Eingriff mit dem Stift 68. Ferner kommen die beiden Magnete 70 und 116 in Anlage miteinander und erzeugen eine magnetische Anziehungskraft, durch die der Filterblock 34 fest an dem Revolver 50 gehalten wird. Wie in Figur 5 durch einen Pfeil angedeutet, wirkt diese Anziehungskraft in radialer Richtung senkrecht zur Drehachse R.

Die an dem Revolver 50 ausgebildeten Eingriffselemente 62, 64 und 68 bilden im Zusammenwirken mit den an den Filterblock 100 ausgebildeten Eingriffselementen 110, 112, 114 Dreipunkt-Auflage, die für eine sichere Arretierung des Filterblocks 100 an dem Revolver 50 sorgt. Die von den beiden Magneten 70 und 116 erzeugte Anziehungskraft begünstigt ferner beim Ankoppeln des Filterblocks 100 an den Revolver 50 die Selbstausrichtung der einander zugeordneten, komplementären Codierstrukturen 56 und 104. Eine Nachjustage und insbesondere der Einsatz von Werkzeugen entfällt, da der Filterblock 100 durch bloßes Anstecken in die optimale Position gebracht wird.

Der Schnittansicht nach Figur 5 ist in Ergänzung zu den Darstellungen nach den Figuren 2 bis 4 zu entnehmen, dass der Filterblock 100 in dem vorliegenden Ausführungsbeispiel das Anregungsfilter 24, das Sperrfilter 26 sowie den Strahlteiler 25 aufweist.

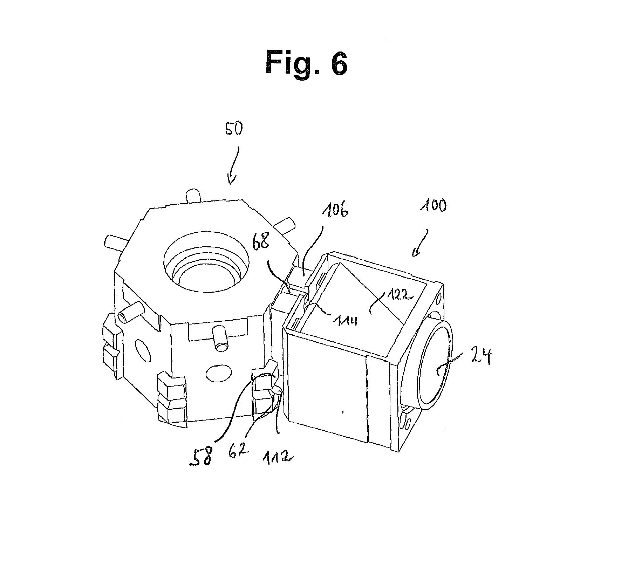

In den Figuren 4 bis 6 ist die Wechselvorrichtung nach erstem Ausführungsbeispiel im montierten Zustand dargestellt. Dabei zeigt Figur 4 eine Seitenansicht und Figur 5 eine Schnittansicht. Wie insbesondere aus den Figuren 4 und 5 hervorgeht, ist der Filterblock 100 im Montagezustand radial auf den Revolver 50 aufgesteckt.

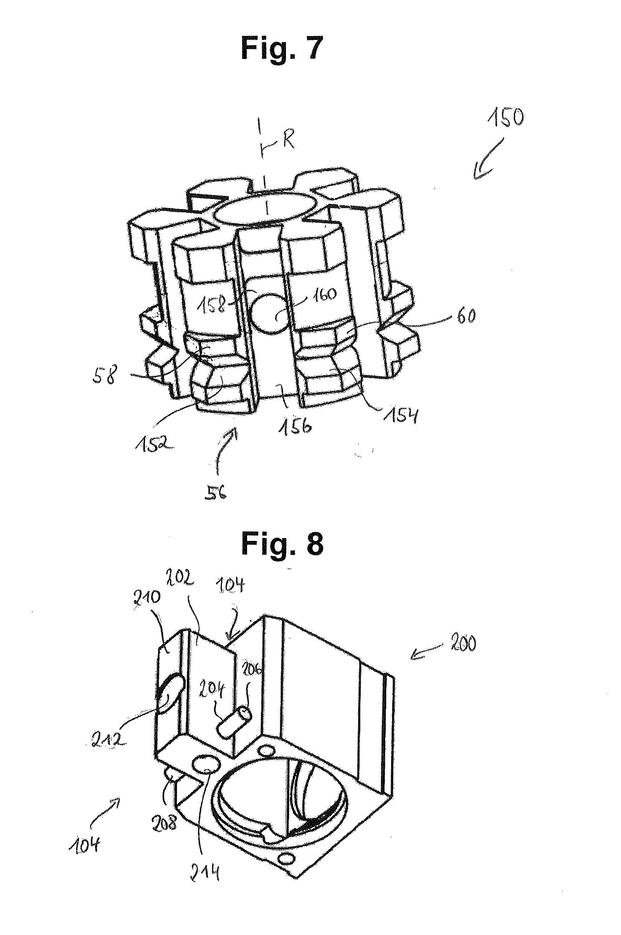

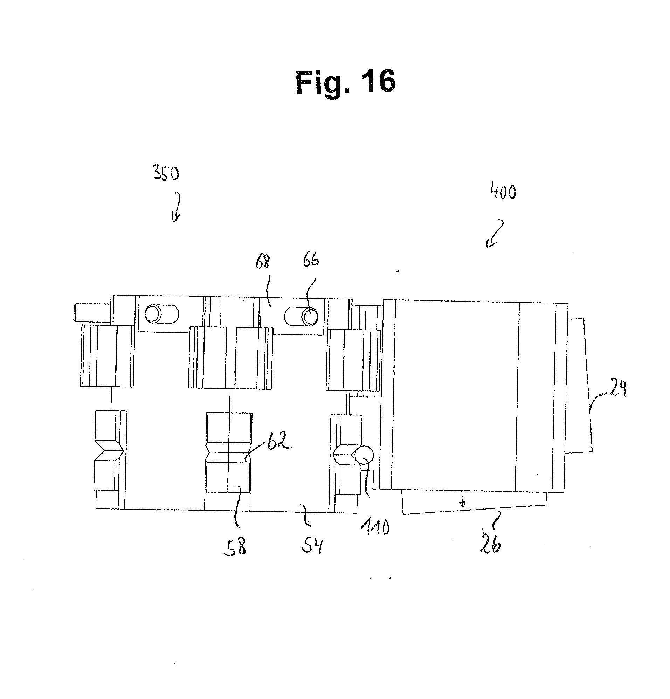

Unter Bezugnahme auf die Figuren 7 bis 16 werden im Folgenden weitere Ausführungsbeispiele der erfindungsgemäßen Wechselvorrichtung beschrieben. Diese unterscheiden die sich von dem in den Figuren 2 bis 6 dargestellten ersten Ausführungsbeispiel durch einzelne Elemente der einander zugeordneten, komplementären Codierstrukturen. Letztere sind auch in den Figuren 7 bis 16 durchgängig allgemein mit 56 bzw. 104 bezeichnet. Im Übrigen sind Komponenten, die denen des ersten Ausführungsbeispiels entsprechen, mit den schon im ersten Ausführungsbeispiel verwendeten Bezugszeichen versehen. Diese Komponenten werden im Folgenden nicht nochmals beschrieben.

In Figur 7 ist ein Revolver 150 nach einem zweiten Ausführungsbeispiel gezeigt, dessen Codierstruktur 56 zwei V-Nuten 152 und 154 aufweist, die in Querrichtung des Revolvers 150 fluchtend aufeinander ausgerichtet sind. Zwischen den Nuten 152 und 154 weist die Codierstruktur 56 eine U-Nut 156 auf, die sich parallel zur Drehachse R erstreckt. Somit bilden die V-förmigen Nuten 152 und 154 gleichsam eine durch die U-förmige Nut 156 unterbrochene Nut. An einer Bodenfläche 158 der U-förmigen Nut 156 ist ein Magnet 160 angeordnet.

Figur 8 zeigt einen Filterblock 200, der dem in Figur 7 dargestellten Revolver 150 zugeordnet ist. Die mechanische Codierstruktur 104 des Filterblocks 200 weist eine quaderförmige Nase 202 auf, die bei der Ankopplung des Filterblocks 200 an den Revolver 150 in die U-förmige Nut 156 greift. Die Nase 202 wird in Querrichtung von einer Stange 204 durchsetzt, deren entgegengesetzte Endabschnitte 206 und 208 für den Eingriff in die V-förmigen Nuten 152 und 154 bestimmt sind. Die Nase 202 weist ferner an seiner Stirnfläche 210 einen Magneten 212 auf, der beim Ankoppeln des Filterblocks 200 an den Revolver 150 in Anlage mit dem in der U-förmigen Nut 156 angeordneten Magneten 160 kommt und so für eine sichere Halterung des Filterblocks 200 an dem Revolver 150 sorgt. An der Unterseite der Nase 202 ist eine Gewindebohrung 214 ausgebildet, in die eine in Figur 8 nicht gezeigte Feststellschraube eingesetzt werden kann, um die Stange 204 an der 202 zu arretieren.

In dem in den Figuren 7 und 8 dargestellten Ausführungsbeispiel sind die Eingriffselemente 152, 154, 206, 208 einerseits und die Eingriffselemente 156, 202 andererseits kreuzweise zueinander angeordnet. Dadurch wird der Filterblock 200 besonders sicher an dem Revolver 150 gehalten.

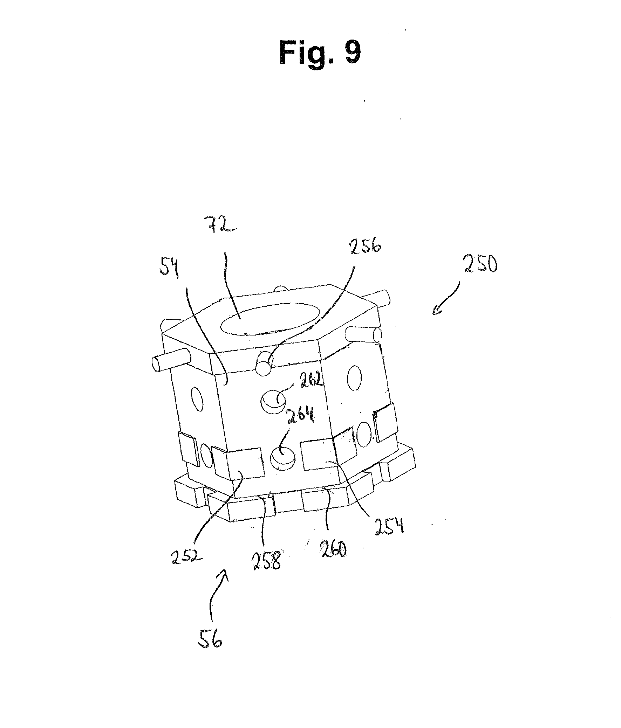

Die Figuren 9 bis 12 zeigen eine Wechselvorrichtung nach einem dritten Ausführungsbeispiel. Dabei ist in Figur 9 ein Revolver 250 dargestellt, dessen mechanische Codierstruktur 56 zwei Anlageflächen 252, 254 sowie einen Stift 256 umfasst. Die Codierstruktur 56 weist ferner am unteren Ende des Revolvers 250 zwei horizontal von der Seitenfläche 54 abstehende Auflageflächen 258 und 260 auf. Ferner sind an der Seitenfläche 54 zwei vertikal gegeneinander versetzte Magnete 262 und 264 angeordnet.

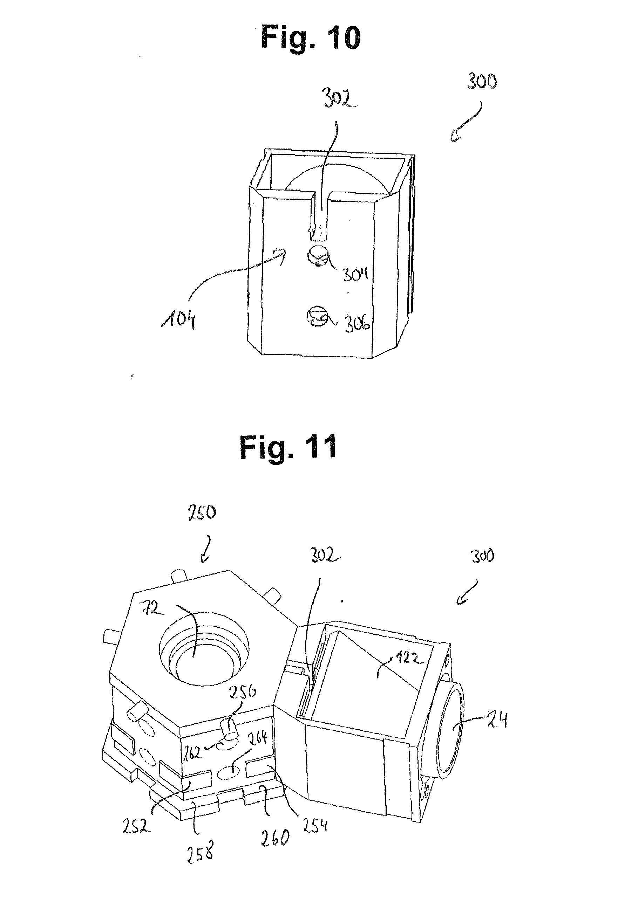

Figur 10 zeigt einen Filterblock 300, der zur Ankopplung an den Revolver 250 bestimmt ist. Die mechanische Codierstruktur 104 des Filterblocks 300 sieht eine längliche, vertikal verlaufende Ausnehmung 302 vor, die zum oberen Ende des Filterblocks 300 hin offen ist. Ferner weist die Codierstruktur 104 vertikal gegeneinander versetzte Magnete 304 und 306 auf.

Bei der Ankopplung des Filterblocks 300 an den Revolver 250 kommt der Stift 256 in Eingriff mit der Ausnehmung 302. Zudem kommen die Anlageflächen 252 und 254, die an der Seitenfläche 54 des Revolvers 250 ausgebildet sind, in Anlage mit Teilen der der Seitenwand 54 zugewandten Stirnseite des Filterblocks 300.

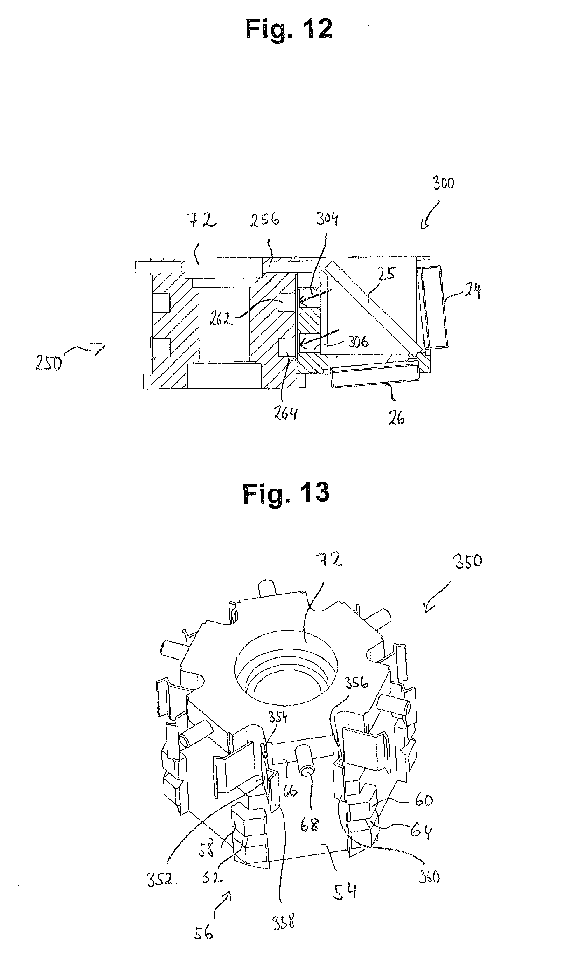

Wie der Darstellung nach Figur 12 zu entnehmen ist, sind die einander paarweise zugeordneten Magnete 262, 304 und 264, 306 jeweils vertikal versetzt zueinander angeordnet. Jedes Paar Magnete 262, 304 und 264, 306 erzeugt so eine magnetische Anziehungskraft, die sowohl eine horizontal wirkende als auch eine vertikal nach unten wirkende Kraftkomponente aufweist. Dies ist in Figur 12 durch die schräg nach unten weisenden Pfeile angedeutet. Die vertikal nach unten gerichteten Kraftkomponenten bewirken, dass diejenigen Teile des Filterblocks 250, die auf den Auflageflächen 258 und 260 des Revolvers 250 aufliegen, gegen die Auflageflächen 258 und 260 gepresst werden. Dagegen sorgen die horizontal gerichteten Kraftkomponenten dafür, dass diejenigen Teile des Filterblocks 300, die an den Anlageflächen 252 und 254 anliegen, gegen die Anlageflächen 252 und 254 gedrückt werden. Schließlich sorgen die horizontal gerichteten Kraftkomponenten auch für einen sicheren Eingriff des Stiftes 256 in die Ausnehmung 302.

In den Figuren 13 bis 16 ist ein viertes Ausführungsbeispiel der erfindungsgemäßen Wechselvorrichtung gezeigt. Diese Wechselvorrichtung umfasst einen in Figur 13 in allein gezeigten Revolver 350, der sich von dem in Figur 2 dargestellten Revolver 50 nach erstem Ausführungsbeispiel im Wesentlichen nur dadurch unterscheidet, dass er anstelle des dort vorgesehenen Magneten 70 an seinem oberen Ende eine Federklemme 352 aufweist, die aus zwei Klemmelementen 354 und 356 gebildet ist. Die freien Enden der Klemmelemente 354 und 356 haben einander zugewandte, nach innen V-förmig geknickte Rastabschnitte 358 und 360.

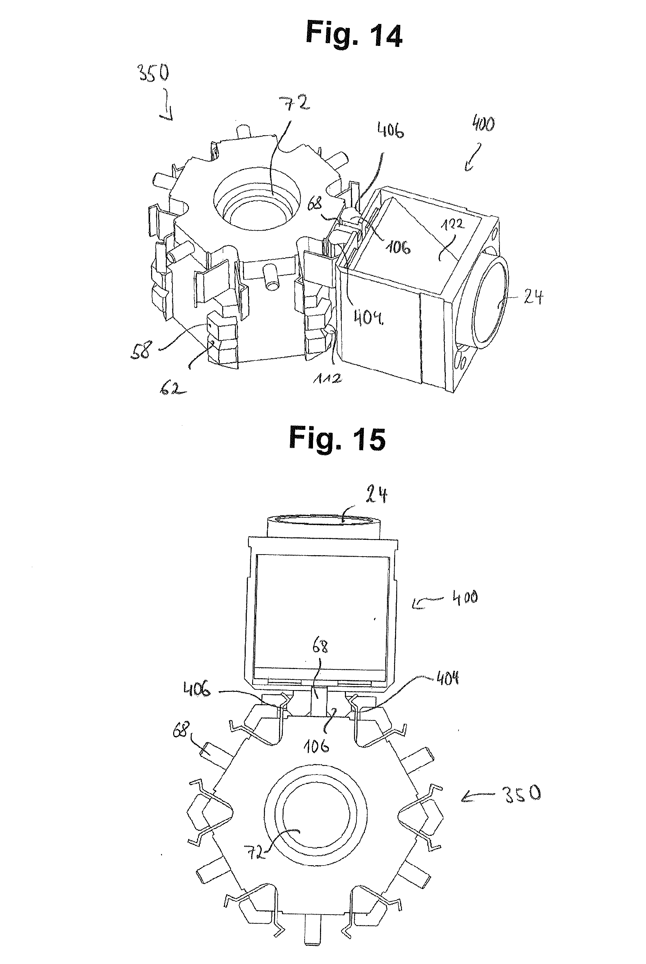

Die Figuren 14 bis 16 zeigen die Wechselvorrichtung nach viertem Ausführungsbeispiel im montierten Zustand. Wie dort zu erkennen ist, unterscheidet sich ein dem Revolver 350 zugeordneter Filterblock 400 von dem in Figur 3 dargestellten Filterblock 100 nach erstem Ausführungsbeispiel lediglich dadurch, dass der dort vorgesehene Magnet 116 durch ein Rastelement ersetzt ist, dass aus zwei Vorsprüngen 404 und 406 gebildet ist, die am oberen Ende der quaderförmigen Erhebung 106 ausgebildet und zur Seite hin abstehen. Wie am besten in Figur 5 zu erkennen, rastet das durch die Vorsprünge 404 und 406 gebildete Rastelement beim Aufstecken des Filterblocks 400 auf den Revolver 350 in die Federklemme 352 ein.

### Bezugszeichenliste

- 10: Fluoreszenzmikroskop
- 12: Wechselvorrichtung
- 14: Stativ
- 16: Revolver
- 18, 18a, 18b: Filterblöcke
- 19: Lichtquelle
- 20: Objektivrevolver
- 21: Beleuchtungsstrahlengang
- 22: Objektiv
- 23: Beleuchtungsoptik
- 24: Anregungsfilter
- 25: Strahlteiler
- 26: Sperrfilter
- 30: Erste Zwischenbildebene
- 31: Tubuslinse
- 32: Umlenkspiegel
- 33: Transportoptik
- 34: Umlenkspiegel
- 35: Umlenkspiegel
- 36: Zweite Zwischenbildebene
- 37: Benutzer
- 38: Okular
- 50: Revolver
- 52: Kopplungsteil
- 54: Seitenfläche
- 56: Erste mechanische Codierstruktur
- 58, 60: Nutsockel
- 62, 64: V-förmige Nuten
- 66: Anlagefläche
- 68: Stift
- 70: Magnet
- 100: Filterblock
- 102: Kopplungsteil
- 104: Zweite mechanische Codierstruktur
- 106: Erhebung
- 108: Stirnfläche
- 110, 112: Vorsprünge
- 114: Ausnehmung
- 116: Magnet
- 150: Revolver
- 152, 154: V-förmige Nuten
- 156: U-förmige Nut
- 158: Bodenfläche
- 160: Magnet
- 200: Filterblock
- 202: Nase
- 204: Stange
- 206,208: Endabschnitte
- 210: Stirnfläche
- 212: Magnet
- 214: Gewindebohrung
- 250: Revolver
- 252,254: Anlageflächen
- 256: Stift
- 258,260: Auflageflächen
- 263,264: Magnete
- 300: Filterblock
- 302: Ausnehmung
- 304, 306: Magnete
- 350: Revolver
- 352: Federklemme
- 354,356: Klemmelemente
- 358,360: Rastabschnitte
- 400: Filterblock
- 404,406: Vorsprünge

## Patentansprüche

1. Wechselvorrichtung für ein Mikroskop (10), umfassend
einen um eine Drehachse (R) drehbar gelagerten Tragekörper (50, 150, 250, 350) mit einem ersten Kopplungsteil (52) und
mindestens ein optisches Element (100, 200, 300, 400) mit einem zweiten Kopplungsteil (102), der zur lösbaren Anbringung des optischen Elementes (100, 200, 300, 400) an dem Tragekörper (50, 150, 250, 350) mit dem ersten Kopplungsteil (52) koppelbar ist,
wobei
der erste Kopplungsteil (52) eine erste mechanische Codierstruktur (56) und der zweite Kopplungsteil (102) eine zweite mechanische Codierstruktur (104) aufweist, die in einer vorbestimmten Montageausrichtung auf die erste Codierstruktur (56) komplementär zu dieser ausgebildet und in dieser Montageausrichtung senkrecht zur Drehachse (R) des Tragekörpers (50, 150, 250, 350) auf die erste Codierstruktur (56) steckbar ist, und
eine der beiden Codierstrukturen (56, 104) mindestens ein erstes Eingriffselement (68, 110, 112, 202, 206, 208, 256), insbesondere einen Stift und/oder einen länglichen Vorsprung, und die jeweils andere Codierstruktur (56, 104) mindestens ein hierzu komplementäres zweites Eingriffselement (62, 64, 114, 152, 154, 156, 302), insbesondere eine Ausnehmung und/oder eine Nut, aufweist, das senkrecht zur Drehachse (R) des Tragekörpers (50, 150, 250, 350) mit dem ersten Eingriffselement (68, 110, 112, 202, 206, 208, 256) in Eingriff bringbar ist, **dadurch gekennzeichnet, dass** die paarweise ineinander greifenden Eingriffselemente (68, 110, 112, 202, 206, 208, 256; 62, 64, 114, 152, 154, 156, 302) und/oder die paarweise aneinander anliegenden Anlageelemente (66, 158, 252, 254, 258, 260; 210) eine Dreipunkt-Auflage definieren.

2. Wechselvorrichtung nach Anspruch 1, **dadurch gekennzeichnet, dass** eine der beiden Codierstrukturen (56, 14) mindestens ein erstes flächiges Anlageelement (66, 158, 252, 254, 258, 260) und die jeweils andere Codierstruktur (56, 104) mindestens ein hierzu komplementäres zweites flächiges Anlageelement (210) aufweist, das senkrecht zur Drehachse (R) des Tragekörpers (50, 150, 250, 350) mit dem ersten Anlageelement (66, 158, 252, 254, 258, 260) in Anlage bringbar ist.

3. Wechselvorrichtung nach Anspruch 1 oder 2, **dadurch gekennzeichnet, dass** die Eingriffselemente kräfteerzeugende Mittel umfassen, welche die Anlageelemente gegeneinander drücken und somit einen selbstausrichtenden Kontakt der Anlageelemente an den Auflageflächen der Dreipunkt-Auflage bewirken.

4. Wechselvorrichtung nach einem der Ansprüche 2 bis 3, **dadurch gekennzeichnet, dass** die mindestens eine Nut aus zwei fluchtend aufeinander ausgerichteten Teilnuten (62, 64, 152, 154) gebildet ist, die in einem Abstand voneinander angeordnet sind.

5. Wechselvorrichtung nach einem der vorhergehenden Ansprüche, **dadurch gekennzeichnet, dass** die mindestens eine Nut zwei Nuten umfasst, von denen eine erste, im Querschnitt vorzugsweise rechteckige Nut (156) parallel zur Drehachse (R) des Tragekörpers (50, 150, 250, 350) und eine zweite, im Querschnitt vorzugsweise dreieckige Nut (152, 154) quer zu der ersten Nut (156) verläuft, und
der mindestens eine Vorsprung zwei Vorsprünge umfasst, von denen ein erster Vorsprung (202) in die erste Nut (156) und ein zweiter Vorsprung (206, 208) in die zweite Nut (152, 154) greift.

6. Wechseleinrichtung nach Anspruch 5, **dadurch gekennzeichnet, dass** die die zweite Nut (152, 154) eine durch die erste Nut (156) unterbrochene Nut ist und der zweite Vorsprung (204) als stangenförmiges Element ausgebildet ist, das den ersten Vorsprung (202) in Querrichtung durchsetzt.

7. Wechselvorrichtung nach einem der vorhergehenden Ansprüche, **dadurch gekennzeichnet, dass** die erste Codierstruktur (56) mindestens ein erstes Verbindungselement (70, 160, 262, 264) und die zweite Codierstruktur mindestens (104) ein zweites Verbindungselement (116, 212, 304, 306)) aufweist, die zur Kopplung der beiden Codierstrukturen (56, 104) lösbar miteinander verbunden sind und die Verbindungselemente (160, 212) jeweils an einem der miteinander in Eingriff bringbaren Eingriffselemente (156, 202) und/oder einem der miteinander in Anlage bringbaren Anlageelemente ausgebildet sind.

8. Wechselvorrichtung nach Anspruch 7, **dadurch gekennzeichnet, dass** eines der beiden Verbindungselemente (160) an einer Bodenfläche (158) der im Querschnitt rechteckigen Nut (156) und das andere Verbindungselement (212) an einer dieser Bodenfläche (158) zugewandten ebenen Stirnseite (210) des in die Nut (156) greifenden Vorsprungs (202) ausgebildet ist, wobei das erste Verbindungselement und/oder das zweite Verbindungselement vorzugsweise magnetisch anziehende Elemente (70, 116, 160, 212, 262, 264, 304, 306) umfasst.

9. Wechselvorrichtung nach einem der vorhergehenden Ansprüche, **dadurch gekennzeichnet, dass** die beiden miteinander in Anlage bringbaren Anlageelemente jeweils aus zwei winklig, vorzugsweise rechtwinklig, zueinander angeordneten Flächen (252, 254, 258, 260) gebildet sind.

10. Wechselvorrichtung nach Anspruch 9, **dadurch gekennzeichnet, dass** die magnetisch anziehenden Elemente (262, 264) bei miteinander verbundenen Codierstrukturen (56, 104) versetzt zueinander angeordnet sind und dadurch eine magnetische Anziehungskraft erzeugen, die zwei Kraftkompenenten hat, die jeweils eine magnetische Anziehung zwischen den miteinander in Anlage gebrachten Flächen der Anlageelemente (252, 254, 258, 260) bewirken.

11. Wechselvorrichtung nach Anspruch 7, 8 oder 10, **dadurch gekennzeichnet, dass** das erste oder das zweite Verbindungselement eine Federklemme (352) und das jeweils andere Verbindungselement ein Rastelement (404, 406) ist, das in die Federklemme (352) einrastet.

12. Wechselvorrichtung nach einem der vorhergehenden Ansprüche, **dadurch gekennzeichnet, dass** das optische Element (100, 200, 300, 400) ein FluoreszenzFilterblock oder ein Neutralfilter oder ein Spektralfilter oder ein Spiegel oder ein abbildendes optisches Element ist.

13. Wechselvorrichtung nach einem der vorhergehenden Ansprüche, **dadurch gekennzeichnet, dass** das mindestens eine optische Element mehrere optische Elemente (100, 200, 300, 400) mit jeweils dem zweiten Kopplungsteil (102) und der Tragekörper (50, 150, 250, 350) mehrere erste Kopplungsteile (52) umfasst, die jeweils einem der zweiten Kopplungsteile (102) zugeordnet sind.

14. Wechselvorrichtung nach Anspruch 13, **dadurch gekennzeichnet, dass** der Tragekörper (50, 150, 250, 350) ein um seine Drehachse (R) rotationssymmetrischer Revolver ist.

15. Mikroskop (10) mit einer Wechselvorrichtung nach einem der vorhergehenden Ansprüche.
